# EUROPEAN PATENT APPLICATION

(11) **EP 1 364 689 A1**
(43) Date of publication of application: **26.11.2003**
(21) Application number: 02004019.2
(22) Date of filing: 22.02.2002
(51) Int. Cl.: A63F 13/12

(54) **Set-top-box**

(71) Applicant: Aluryina International Corporation, Panama (PA)
(72) Inventor: Zitzke, Roland, 29553 Bienenbüttel (DE)
(74) Representative: Eisenführ, Speiser & Partner

(57) **Abstract**

The invention relates to a set-top-box which can stand alone or which is integrated in a TV receiver, for example a TV set or video recorder. The set-top-box also can be simply connected to the scart connector of the TV receiver and possibly contains also the possibility to generate on-screen display information on the screen of said TV receiver.

Game shows are quite popular in these days. Game shows like "Who becomes a Millionaire" or such a like have the concept, with some variations, which is always similar, if not the same.

The invention according to this application describes a concept which allows everyone to become a virtual candidate and thereby a direct participant in a show, also with the possibility to win a price.

Set-top-box, able to receive at least data, transmitted together with the TV signal, whereby the data containing information allocated to the content of the TV program which is transmitted with the TV signals, whereby the set-top-box is comprising a clock circuit controlled by said data, said set-top-box is able to receive user commands, received by command means, for example a usual remote control, whereby the set-top-box is comprising also a memory for memorizing said data, transmitted with the TV signal as well as said command inputs of the user, whereby said data or parts thereof and user commands are memorized together with the clock time when the user command is received by said set-top-box, said set-top-box is comprising a (processor) unit comparing the user inputs with said data, transmitted with said TV signal, said set-top-box is also comprising display means for displaying the result of the user inputs compared with the data, transmitted to the TV signal.

## Description

The invention relates to a set-top-box which can stand alone or which is integrated in a TV receiver, for example a TV set or video recorder. The set-top-box also can be simply connected to the scart connector of the TV receiver and possibly contains also the possibility to generate on-screen display information on the screen of said TV receiver.

Game shows are quite popular in these days. Game shows like "Who becomes a Millionaire" or such a like have the concept, with some variations, which is always similar, if not the same.

A group of people, chosen prior to the show is located in a studio room together with the show master. The candidates have to answer certain questions within a given time. In many cases, a multiple-choice scheme is given for the answers or the answer is a number that must be approached. Each candidate maintains a score during the show. The high-score candidate is the winner. The winner usually wins an item which is extensively advertised during the whole show for example a washing machine or a television set or a car or such a like or cash.

A typical question in such quiz show could be for example:
Who was the first president in the United States of America?
Offered answers:
   1) Abraham Lincoln
   2) Bill Clinton
   3) George Washington
   4) Thomas Jefferson

The correct answer of course is the third answer, namely George Washington and if the candidate in the studio is giving the right answer he is going to the next step (in the game show "Who becomes a Millionaire") or is winning directly after the answer the price which is allocated to that question.

Such shows are entertaining in a good way the viewers of the TV program. But one of the obvious disadvantages of such TV program concept is, that the millions of people watching the show are unable to participate themselves in any way. All they can do is keep their fingers crossed for their favourite candidate and if they are having the right answer to a difficult question, nobody will take a notice of their cleverness.

The invention according to this application describes a concept which allows everyone to become a virtual candidate and thereby a direct participant in a show, also with the possibility to win a price.
Many approaches exist to overcome this by using a back-channel from the TV set to the transmitting site e.g. via the internet or some additional modem facility. The problem with all of these systems is however, that they require substantial installations on the user's site. This invention solves this problem without the need for any automated response channel.
This aim is reached by an inventive set-top-box with the features of claim 1.

Set-top-box, able to receive at least data, transmitted together with the TV signal, whereby the data containing information allocated to the content of the TV program which is transmitted with the TV signals, whereby the set-top-box is comprising a clock circuit controlled by said data, said set-top-box is able to receive user commands, received by command means, for example a usual remote control, whereby the set-top-box is comprising also a memory for memorizing said data, transmitted with the TV signal as well as said command inputs of the user, whereby said data or parts thereof and user commands are memorized together with the clock time when the user command is received by said set-top-box, said set-top-box is comprising a (processor) unit comparing the user inputs with said data, transmitted with said TV signal, said set-top-box is also comprising display means for displaying the result of the user inputs compared with the data, transmitted to the TV signal.

The concept of the invention is that the show participation is realized by a small set-top-box which either contains a full TV reception facilities or which is simply connected to the SCART connector of the TV receiver. The set-top-box may also be part of the TV receiver and therefore may be fully implemented in the TV receiver. This set-top-box does not necessarily produce an OSD, nevertheless it may be provided with such OSD means and it may have a simple sound playback/generation facilities and a rather small proprietary display.

As known, television is a unidirectional transmission system that means there is absolutely normally no possibility to send an information from the TV receiver to the TV station, unless a cable modem, phone line, satellite transmitter or similar equipment is used.

The inventive set-top-box will take the role of the show master that means that the set-top-box knows the correct answers. These answers are transmitted during the show in a data stream, for example with the teletext data stream transmitted together with the TV signal of the show. In case of digital video broadcasting, the data service compliant can also be an extra data stream or a mpeg2 data channel can be used.

The (correct) answers to a question given in a show are transmitted in an encrypted way to prohibit abuse of the system and is very important to use a time synchronized data transport like teletext or the way analogue teletext is transmitted over digital video broadcasting.

The time frame in which a certain answer is valid, is also transmitted. This is done in a real time during the show and therefore is to be directly linked to the clock of the life candidates.

The inventing set-top-box contains a unique identification (id). Before the user can actually participate in a show, he needs to register first over the phone or fax or other data line or with a signed registration form sent to the provider. He will need to provide the unique number shown on his box together with his name, phone number or other personal information to get his registration.

The invented set-top-box is also able to receive user commands, for example commands coming from a remote control unit which has usually standard keys like digited keys 1-9, A...Z, Yes, No, Higher, Lower, +, -, or such a like.

Said remote control may also be the remote control of the TV receiver and a user command then may be received by the remote control receiver of the TV signal and is passed to said set-top-box via the data line of the scart connection.

Now the user can provide answers during the show with the same time restriction that are valid for the candidates within the show. The set-top-box will register the inputs, but there is no instant feedback given by the box. This is done by the show master in the studio for the life candidates anyway after the time for answering has expired.

When the show is finished, the box will know the score of the "home candidate" and if, and only if, he has given the right answers to the questions, the box will display an address (e-mail address) or phone number of an automated service. It is possible to define by the provider what score is necessary to be a winner.

The automated phone service will first request the user to provide his unique ID and possibly a pin. The set-top-box will then also provide a sequence of digits, which is an encoded representation of the user score.

All other user data is already present after registration and there is no need to request it again.

The show master has then the choice of drawing - selecting a winner (most likely the one with the highest score) and to call him back (he gave his phone number during registration).

From a commercial point of view the success of such shows assisting such inventive set-top-box depends on the number of people watching it. Allowing them to participate brings a new attraction to such concepts.

In an ideal scenario, TV transmissions are always excellent and therefore the time-synchronized information is always received by the box without the need for repeating it. In addition, everybody has a telephone with DTMF (touch tone dialling) and the phone lines are reliable. This is certainly the case for central Europe, but for other countries like Turkey there need to be some considerations.

For example there should be a slight tolerance in time frames, allowed to answers to send out the information twice or three times, just to reduce transmission problems.

Also the box could have the capability to generate DTMF tones through a speaker to generate the necessary tones for the phone service. The user will hold the phone close to the speaker. Note that this concept purposely does not include a modem facility as this is expensive, requires another wall outlet and last but not least eliminates a possible cash source which is to provide the dial-in user with advertisement before he can take further steps.

In case phone lines capabilities are limited it is an option to only allow people with certain identifications (odd or even end digits) to dial in for one show - this information would be part of the answer data.

The invented concept is also shown in the attached figures.

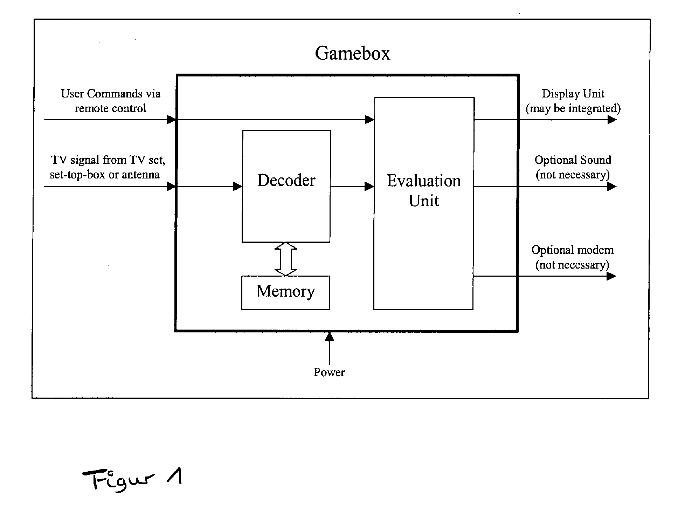

Figure 1 is showing a block diagram of an inventive set-top-box (game box) containing an evaluation unit, a decoder and a memory. It may be a usual teletext decoder decoding the teletext information and writing extracted data contained in the data stream of the teletext to the memory. Said data may be the correct answer data as well as the clock information allocated said answer data and also the time frame within the correct answer has to be given.

The evaluation unit is receiving user commands by the remote control either directly from remote control allocated to the set-top-box or remote control allocated to the TV receiver whereby such commands then are passed by the scart connection to the set-top-box.

Whenever a user is giving a command to the set-top-box, for example the number 3 (see the example above) as number of the correct answer (George Washington) the evaluation unit is comparing the given command (number 3) and is also checking whether the command was inputted during the time frame, defined by the show concept.

In case of a correct answer the evaluation unit may directly output an information to the user for example tone signal or a visual indication is displayed on the display of the TV receiver or on the display of the set-top-box.

In the memory there is also stored data of a menu which may be displayed on the TV scream, showing that a certain number of right answers has to be given within the time frames, defined by the show concept.

If, for example the user at home has given 15 right answers to 15 questions within the time frame defined by the show concept, the set-top-box automatically or upon further command by the user is initiating a menu on the TV scream of the TV set showing the user all the relevant data that he can get in connection with the producer or the show master of the TV show, he also has the possibility to win a price.

## Claims

1. Set-top-box, able to receive at least data, transmitted together with the TV signal, whereby the data containing information allocated to the content of the TV program which is transmitted with the TV signals, whereby the set-top-box is comprising a clock circuit controlled by said data, said set-top-box is able to receive user commands, received by command means, for example a usual remote control, whereby the set-top-box is comprising also a memory for memorizing said data, transmitted with the TV signal as well as said command inputs of the user, whereby said data or parts thereof and user commands are memorized together with the clock time when the user command is received by said set-top-box, said set-top-box is comprising a (processor) unit comparing the user inputs with said data, transmitted with said TV signal, said set-top-box is also comprising display means for displaying the result of the user inputs compared with the data, transmitted to the TV signal.

2. Set-top-box according to claim 1,
whereby the data, transmitted with said TV signal contain specific answers to questions, occurring during the TV program, whereby the answer is allocated to a number or to a specific command which can be given by the user by use of said remote control and whereby the comparison is executed between said data comprising the answer information and the user input in relation to a predetermined time (time frame), defined by the data received with said TV signal.
